# EUROPEAN PATENT APPLICATION

(11) **EP 4 120 689 A1**
(43) Date of publication of application: **18.01.2023**
(21) Application number: 21185068.0
(22) Date of filing: 12.07.2021
(51) Int. Cl.: H04N 21/431, H04N 5/222

(54) **SYSTEM AND METHOD FOR CONFIGURING THE GRAPHICAL LAYOUT OF AT LEAST ONE MULTI-VIEWER DISPLAY**

(71) Applicant: Rohde & Schwarz GmbH & Co. KG, 81671 München (DE)
(72) Inventor: Fuerst, Josef, 81671 München (DE); Krupka, Rene, 81671 München (DE); Lautenbacher, Markus, 81671 München (DE); Hackmann, Alexander, 81671 München (DE)
(74) Representative: Prinz & Partner mbB

(57) **Abstract**

The invention concerns a system (10) for configuring the graphical layout of at least one multi-viewer display, wherein the system (10) comprises at least one processing and presentation module (12) that is configured to receive at least one input signal, to process the at least one input signal, thereby generating at least one output signal depending on the at least one input signal, and to output the at least one output signal. The system (10) comprises at least one display module (18) that is connected with the processing and presentation module (12). The at least one display module (18) is configured to forward the at least one output signal to an output device (22). The system (10) comprises a data base (24) that is configured to store predefined information of at least one system setup. The predefined information comprises configuration information for the display module (18) and/or the processing and presentation module (12). The configuration information defines a desired application-specific layout of the at least one multi-viewer display. The system (10) comprises at least one interface (26) configured to connect the processing and presentation module (12) with the data base (24) such that the processing and presentation module (12) is enabled to access the data base (24), thereby retrieving the predefined information stored. The system (10) is configured to provide an application-specific display of the multi-viewer display since the display module (18) is configured to forward data associated with the at least one output signal in the application-specific layout based on the predefined information of the at least one system setup, thereby providing an application-specific display layout and an application-specific room design.

## Description

The invention relates to a system for configuring the graphical layout of at least one multi-viewer display. Furthermore, the invention also relates to a method of configuring the graphical layout of at least one multi-viewer display.

In the state of the art, systems are known that are used for configuring the graphical layout of at least one multi-viewer display wherein an operator of the system has to configure the desired display layout of the multi-viewer display manually by using pre-defined functional blocks that are provided on an operator interface, e.g. a display of the respective system. Thus, the operator has to select the respective functional blocks and to arrange them accordingly in order to obtain the desired graphical layout of the multi-viewer display. The desired graphical layout usually depends on the content to be presented, the users of the multi-viewer display due to their respective needs and/or the respective application in general.

Hence, the manual efforts of the operator are high in order to obtain the desired display layout for the multi-viewer display in case of changing circumstances. The respective efforts further increase dramatically in case of several multi-viewer displays having different demands or rather requirements with regard to their respective layouts since the operator has to adapt the respective configurations or rather settings of the multi-viewer display manually for each of the different multi-viewer displays.

Accordingly, there is a need for a system as well as a method that enable an operator to quickly adapt the respective configuration of a multi-viewer display in a simplified manner, thereby reducing the manual efforts.

The invention provides a system for configuring the graphical layout of at least one multi-viewer display. The system comprises at least one processing and presentation module that is configured to receive at least one input signal, to process the at least one input signal, thereby generating at least one output signal depending on the at least one input signal, and to output the at least one output signal. The system further comprises at least one display module that is connected with the processing and presentation module, wherein the at least one display module is configured to forward the at least one output signal to an output device. The system also comprises a data base that is configured to store predefined information of at least one system setup, wherein the predefined information comprises configuration information for the display module and/or the processing and presentation module, wherein the configuration information defines a desired application-specific layout of the at least one multi-viewer display. The system comprises at least one interface configured to connect the processing and presentation module with the data base such that the processing and presentation module is enabled to access the data base, thereby retrieving the predefined information stored. The system is also configured to provide an application-specific display of the multi-viewer display since the display module is configured to forward data associated with the at least one output signal in the application-specific layout based on the predefined information of the at least one system setup, thereby providing an application-specific display layout and an application-specific room design.

Further, the invention provides a method of configuring the graphical layout of at least one multi-viewer display, wherein the method comprises the steps of:
- Receiving at least one input signal by means of a processing and presentation module,
- Processing the at least one input signal by means of the processing and presentation module,
- Accessing, by means of the processing and presentation module, a data base via an interface configured to connect the processing and presentation module with the data base, wherein the data base comprises predefined information of at least one system setup, wherein the predefined information comprises configuration information for a display module and/or the processing and presentation module, wherein the configuration information defines a desired application-specific layout of the at least one multi-viewer display,
- Generating at least one output signal depending on the at least one input signal,
- Outputting the output signal by means of the processing and presentation module,
- Receiving, by means of the display module, the output signal from the processing and presentation module, and
- Forwarding the output signal to an output device.

Accordingly, the invention provides a system that is enabled to provide an application-specific display layout and an application-specific room design, resulting in a specific scenario. The scenario takes the respective application ("content" of the visualization), the physical room and the desired display layout into account wherein the information is at least partially gathered from the predefined information stored containing configuration information. Hence, the display layout can be adapted to the respective scenario applied easily without high manual efforts. Particularly, needs or rather demands of the user of the multi-viewer display are taken into account due to the application-specific room design since the respective users may be located in a certain (physical) room, e.g. a news room, a master control room, an operations room or rather a monitoring room used for monitoring purposes. The specific (physical) room may have certain physical requirements, especially concerning the output devices provided that can be used by the system for providing the respective content. Thus, the application-specific room design takes the physical requirements/constraints into account in order to provide a display layout for the multi-viewer display, which has optimized characteristics. In other words, the specific situation of the output device, e.g. its location or rather the room accommodating the respective output device, is taken into account due to the predefined information of the at least one system setup such that the operator does not have to manually configure the respective display layout since the respective information has been predefined accordingly.

Moreover, the specific content ("application") is also taken into account, e.g. which kind of content is illustrated. For instance, sports event or rather news are presented in a different manner such that the display layout is adapted depending on the application, resulting in the application-specific display layout.

Both, the application-specific display layout and the application-specific room design are commonly taken into consideration for the respective graphical layout of at least one multi-viewer display.

As mentioned above, the respective configuration information defines the desired application-specific layout of the multi-viewer display, which is retrieved by the processing and presentation module when accessing the data base. The information gathered may be forwarded to the display module via the processing and presentation module. Alternatively, the display module may also access the data base accordingly in order to directly retrieve the information required. Hence, the display module may also be connected with the data base accordingly.

The respective output device may correspond to the multi-viewer display or rather an interposed device that is located between the system and the multi-viewer display. Thus, the display module forwards the output signal or rather data associated therewith to the multi-viewer display.

Generally, the entire system may be provided at a broadcasting site, a stream generation site, a studio production site, a power plant, a greenhouse or rather a public surveillance site. The respective site may correspond to a specific facility, e.g. a broadcasting facility or rather studio production facility.

Hence, the multi-viewer display may be used for generating a broadcasting signal or rather a streaming signal. The operator may provide the respective information of different content to be distributed for different users, e.g. users in an operations room or rather users in a master control room.

However, the multi-viewer display may also be used for monitoring purposes in order to monitor several physical rooms simultaneously, particularly rooms at a power plant. Moreover, the multi-viewer display may be used for surveillance purposes of public places or rather public transportation. Hence, the contents of several different video streams may be provided on the at least one multi-viewer display in order to enable security personnel to review several areas simultaneously.

An aspect provides that the system comprises an operator and control room that accommodates a user interface device that is configured to enable a user of the system to control the processing and presentation module at least. Therefore, the operator may interact by means of the user interface device with the processing and presentation module in order to provide information concerning the desired layout that may depend on the respective specific application scenario that is associated with the system setup. Hence, the operator may set a certain system setup such that the corresponding predefined information is accessed by the processing and presentation module.

Another aspect provides that the predefined information of the at least one system setup defines which video and/or audio channels, particularly together with their respective bitrates, are used by the processing and presentation module for generating the at least one output signal. Thus, the predefined information may result in different audio and/or video channels to be used for generating the output signal. Moreover, the respective channels may be selected with varying and/or constant bitrates depending on the respective scenario applied. For instance, the content of a certain video channel may be of less importance such that its content is processed by means of a reduced bit rate.

In general, customer-specific scenarios are stored in the data base together with predefined scenarios provided by the manufacturer. Therefore, the data base provides enough storage capacity for individual scenarios that have been created by the customer, e.g. the operator of the system. Moreover, a certain set of template scenarios may be provided by the manufacturer of the system wherein these templates can be used directly and/or adapted by the customer, namely the operator of the system, with regard to the specific needs or desires.

Further, the system may be configured to provide a centralized monitoring, controlling and configuration of several multi-viewer devices connected with the system. Particularly, the several multi-viewer devices are connected with the at least one display module. As mentioned above, the multi-viewer devices may relate to the output devices or rather multi-viewer display.

For instance, the system comprises several display modules that are associated with different (physical) rooms, wherein one or more multi-viewer devices are connected with a dedicated display-module that is associated with a certain (physical) room. Thus, several multi-viewer devices may be associated with a certain (physical) room that accommodates at least a single display module of the system that has several display modules in total.

Each of the display modules may be addressed individually, e.g. by means of IP addresses, such that the application-specific layout can be applied by means of the display module when processing the output signal received from the processing and presentation module.

The system may be further configured to download and install updates for multi-viewer devices connected with the system in a centralized manner. Thus, the entire system as well as further devices connected with the system may be updated in centralized manner, for instance by means of the operator or even automatically, such that it is not necessary to individually update the different decentralized multi-viewer devices.

Moreover, the system may be configured to toggle between different scenarios by means of an one-click input issued at a user interface. Particularly, several multi-viewer devices are operated in different scenarios by means of an one-click input. Thus, the operator of the system can easily change a respective scenario applied by simply hitting a certain operational member provided at the user interface, e.g. a button or rather switch, thereby switching from a first scenario applied to a second scenario if desired. Therefore, the manual efforts required for providing the different layouts, namely the application-specific room design as well as the application-specific display layout design, can be changed easily and directly due to the predefined information provided by the data base.

Another aspect provides that the system is configured to generate a new scenario to be applied by means of a drag-and-drop functionality. The operator of the system is enabled to create new scenario that may be stored in the data base by simply using pre-defined functional blocks that can be selected and positioned by means of the drag-and-drop functionality such that a certain scenario, namely the application-specific scenario, can be generated.

For instance, a set of predefined monitor types, e.g. with regard to their sizes, their maximum resolution and/or their (relative) orientation, may be chosen from a list or rather a data base illustrated on the user interface device, wherein the set of predefined monitor types is provided for each physical location, namely each room, individually with regard to the current situation.

The input signal may be at least one audio signal and/or video signal and/or wherein the input signal is at least one data signal, particularly an IP signal. In fact, the input signal may also relate to a combination of an audio signal, a video signal and/or a data signal such as an IP signal, wherein the combined signal is processed by the system appropriately.

The at least one interface may relate to an IP ("Internet Protocol") interface, an ASI ("Asynchronous Serial Interface"), a HDMI ("High Definition Multimedia Interface"), a DisplayPort interface and/or a SDI ("Serial Digital Interface"). Generally, the at least one interface is an interface for audio and/or video information. Therefore, the processing and presentation module may be connected with the data base by means of one of the several interfaces depending on the data exchanged and/or the respective environment. For instance, ASI is a serial transmission via a coaxial cable or an optical cable, ensuring long distance transmission. ASI is typically used in Digital Video Broadcasting (DVB).

The output device may correspond to a monitor, e.g. the multi-viewer display, or an additional subsystem configured to further process the at least one output signal, particularly prior to being forward to the multi-viewer display. For instance, the addition subsystem relates to an IP to multimedia interface converter, e.g. an IP to High Definition Multimedia Interface (HDMI) converter or an IP to DisplayPort converter, wherein the IP to multimedia interface converter is connected with a monitor having a respective multimedia input interface, which outputs the content of the output signal.

Generally, the multimedia interface may be configured to ensure digital image and/or audio transmission. For instance, the multimedia interface is an audio/video interface for transmitting uncompressed video data and compressed or uncompressed digital audio data.

Particularly, the output device and/or the additional subsystem may be connected locally or remotely over a network.

The processing and presentation module may have an input via which the at least one input signal is received.

The input of the processing and presentation module is associated with an input interface that may be an IP ("Internet Protocol") interface, an ASI ("Asynchronous Serial Interface"), a HDMI ("High Definition Multimedia Interface"), a DisplayPort interface and/or a SDI ("Serial Digital Interface"). Generally, the at least one input interface is an interface for audio and/or video information.

The processing and presentation module may have an output via which the at least one output signal is outputted.

The output of the processing and presentation module is associated with an output interface that may be an IP ("Internet Protocol") interface, an ASI ("Asynchronous Serial Interface"), a HDMI ("High Definition Multimedia Interface"), a DisplayPort interface and/or a SDI ("Serial Digital Interface"). Generally, the at least one output interface is an interface for audio and/or video information.

Another aspect provides that the system comprises several multi-viewer devices connected with the at least one display module. As mentioned above, the system may comprise several display modules which are associated with specific physical rooms. The several multi-devices may be connected to a single display module or rather to several display modules. Typically, one display module may be located within one physical room, wherein one or more multi-viewer devices may be connected with the specific display module accommodated in the physical room.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

In fact, the processing and presentation module may comprise a server that accesses the data base and/or forwards the at least one output signal to the display module accordingly, for instance by means of an IP infrastructure.

Generally, an effective and central control and management for large number of multi-viewer displays is provided by the system, which may provide input/output scalability and availability of matrix switch-based multi-viewer displays to an IP-domain. In other words, a central and efficient manipulation and automation of device and operational settings, e.g. inputs, channels, mosaic layouts, etc., for large IP-multi-viewer installations in studio/production environments is provided, which provides increased productivity and operational flexibility while saving costs and time.

The forgoing aspects and many of the attendant advantages of the claimed subject matter will become more readily appreciated as the same become better understood by reference to the following detailed description, when taken in conjunction with the accompanying drawings. In the drawings,
- Figure 1 schematically shows an overview of a system according to the invention,
- Figure 2 schematically shows an overview illustrating a physical room configuration,
- Figure 3 schematically shows an overview illustrating a scenario configuration, and
- Figure 4 schematically shows an overview illustrating different scenarios applied to different physical rooms.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

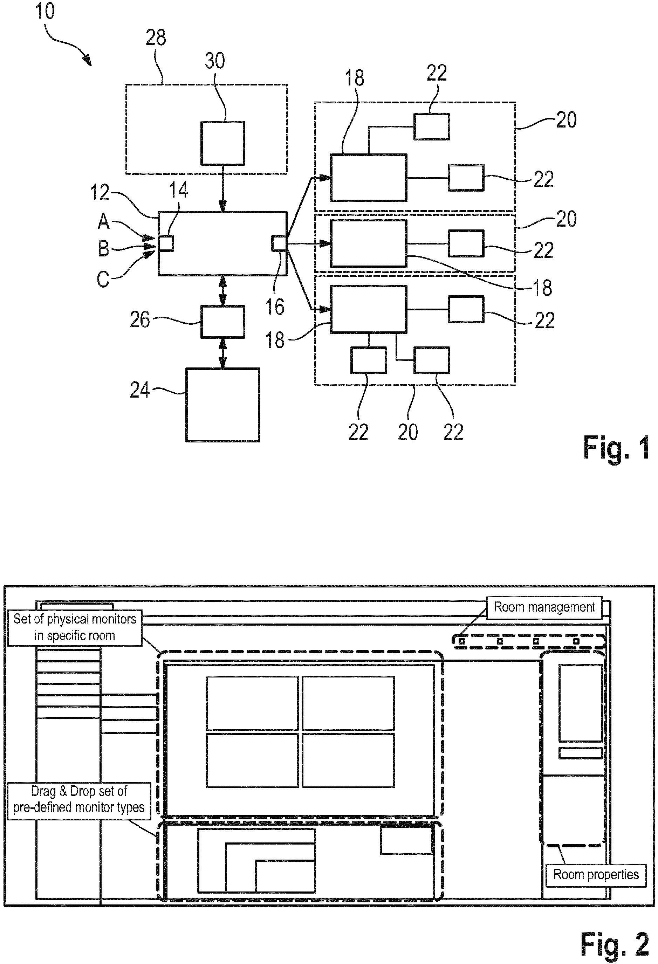

In Figure 1, a system 10 is shown that is used for configuring a graphical layout of at least one multi-viewer display that is used for illustrating the content of different input signals.

The system 10 comprises at least one processing and presentation module 12 that has an input 14 for receiving at least one input signal. The at least one input signal may relate to an audio signal, a video signal and/or an IP signal. Hence, the at least one input signal may concern a combination of an audio signal, a video signal and/or an IP signal, e.g. a combined signal. In Figure 1, three different input signals labelled with "A", "B", and "C" are exemplarily shown.

The at least one input signal received by the input 14 is processed internally by means of the processing and presentation module 12, thereby generating at least one output signal that depends on the at least one input signal. The output signal generated is outputted via an output 16 of the processing and presentation module 12 for further processing.

The system 10 further comprises at least one display module 18 that is connected with the processing and presentation module 12, particularly its output 16. Hence, the display module 18 receives the output signal of the processing and presentation module 12.

The display module 18 may be accommodated in a certain physical room 20 wherein at least one output device 22 is connected with the display module 18, particularly a multi-viewer device or rather a multi-viewer display. Hence, the display module 18 is configured to forward the at least one output signal received from the processing and presentation module 12 to the output device 22.

Alternatively, the output device 22 corresponds to an additional subsystem that is configured to further process the at least one output signal, particularly an IP to multimedia interface converter. The additional subsystem may be connected with the multi-viewer display. The multimedia interface may relate to HDMI, SDI or rather DisplayPort or any other suitable multimedia interface.

The system 10 further comprises a data base 24 that is connected with the processing and presentation module 12 via an interface 26, for instance an IP interface, an asynchronous serial interface (ASI) and/or a serial digital interface (SDI). The data base 24 stores predefined information of at least one system setup, wherein the predefined information comprises configuration information for the display module and/or the processing and presentation module. The configuration information defines a desired application-specific layout of the at least one multi-viewer display associated with the output device 22 connected with the display module 18.

Since the processing and presentation module 12 is connected with the data base 24 via the interface 26, the processing and presentation module 12 is enabled to access the data base 24, thereby retrieving the predefined information stored.

The display module 18 may also access the data base 24 directly or rather retrieve the respective information from the processing and presentation module 12.

Generally, the processing and presentation module 12 may process the at least one input signal and the predefined information accessed from the data base 24 in order to generate the output signal that is forwarded to the display module 18.

Accordingly, the entire system 10 is configured to provide an application-specific display of the multi-viewer display since the display module 18 is configured to forward data associated with the at least one output signal in an application-specific layout to the output device 22 connected with the display module 18. The application-specific layout is based on the predefined information of the at least one system setup that is stored in the data base 24. Hence, the predefined information itself is also application-specific.

In general, an application-specific display layout and an application-specific room design is ensured as information concerning the physical room 20 and its specific situation as well as information concerning the user of the output device 22, e.g. the viewers, are taken into account in order to provide the application-specific display of the multi-viewer display, namely the output device 22.

Figure 1 further reveals that the entire system 10 comprises several display modules 18 that are accommodated in different physical rooms 20, wherein each room 20 has an application specific room design requirement concerning the graphical layout of the multi-viewer display associated with the specific physical room 20.

This may depend on the physical requirements provided in the specific physical room 20 due to the multi-viewer devices provided in the specific physical room 20. For instance, small or rather medium sized display devices or rather monitors are located in the specific physical room 20 such that the layout of the multi-viewer display has to be adapted to the physical constraints provided by the respective hardware. The respective room configuration is also shown in Figure 2.

The overview shown in Figure 2 illustrates a graphical overview with a set of physical output devices 22 in a specific physical room 20. Moreover, the operator is enabled to adapt the room configuration by means of a drag-and-drop functionality, thereby adding a predefined monitor type to the specific room configuration. Furthermore, certain monitors, e.g. output devices 22, may be deleted by a drag-and-drop functionality as well.

Accordingly, the physical requirements of each room may be set by the overview shown, thereby providing the room configuration being part of the predefined information of the system setup, namely the physical environment.

Moreover, room properties may be set by means of the graphical overview.

In addition, it is shown that the respective output devices 22, e.g. the multi-viewer displays, are associated with certain content to be illustrated, namely "news", "weather", "sport" and "view desk".

The respective configuration can be stored for each of the individual physical rooms 20 by means of the room management such that the rooms 20 available are saved, e.g. their respective configurations.

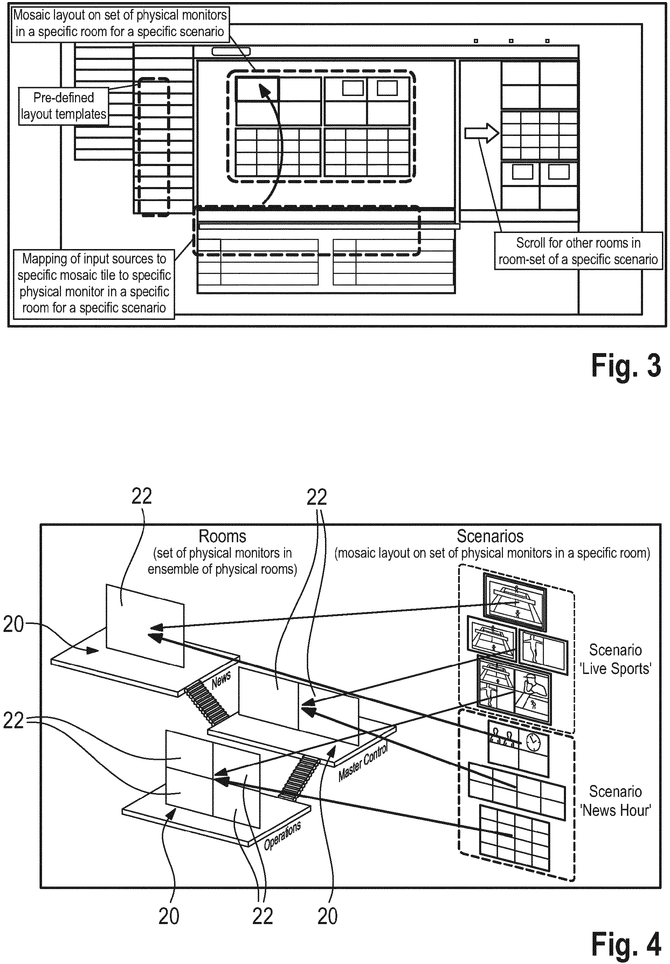

Besides the application-specific room design, an application-specific display layout design is also taken into consideration as already mentioned above. This is exemplary shown in Figure 3.

Accordingly, a certain physical room 20 may be selected such that the physical output devices 22 of the respective physical room 20 are illustrated for configuration purposes.

The operator may select pre-defined templates and, optionally, adapt these templates according to his needs. For instance, the screen of a single output device 22 may be divided into several tiles that can be used for illustrating different information, e.g. different kind of data or rather different input signals.

It is further shown that the operator is enabled to map the input signals to the specific tiles of the physical output devices 22 in the specific physical room 20 for a certain scenario.

In general, the respective scenario applied may depend on the content, namely the application, and the physical room 20 or rather the physical requirements of the specific physical room 20, for instance "live sports" or rather "news hour" as shown in Figure 4.

In Figure 4, it is illustrated that the same content, e.g. "live sports" or "news hour" is differently illustrated depending on the specific physical room 20, namely the number and types of output devices 22 provided. In the example shown, the rooms 20 relate to a news room, a master control room and an operations room, each having different numbers of output devices 22.

Depending on the content or rather application applied, a different layout is applied to the respective output device(s) 22.

Referring back to Figure 1, the system 10 further comprises an operator and control room 28 that accommodates a user interface device 30 that is configured to enable the operator of the system 10 to control the components of the system 10 accordingly.

Particularly, the operator is enabled to select an application-specific layout based on the predefined information of the at least one system setup in order to define the graphical layout of the at least one multi-viewer display for a certain physical room 20.

Generally, the predefined information of the at least one system setup defines which video and/or audio channels together with the respective bitrates of the individual signals may be used by the processing and presentation module 12 that receives the several or rather all video and/or audio channels of the system 10, thereby generating the at least one output signal based on the predefined information retrieved when accessing the data base 24.

In the data base 24, customer-specific scenarios together with predefined scenarios, namely template scenarios, may be stored that can be selected by the operator accordingly.

In general, the system 10, particularly the processing and presentation module 12, is enabled to provide a centralized monitoring, controlling and configuration of several multi-viewer devices, namely the output devices 22, connected with the system 10, namely the multi-viewer displays connected with a display module(s) 18.

The system 10 is further configured to download and install update(s) for the devices connected with the system 10 in a centralized manner, thereby updating the output devices 22 accordingly.

Since the operator is enabled to operate the entire system 10 by means of the user interface device 30 accommodated in the operator and control room 28, the operator is enabled to toggle between different scenarios to be applied by means of an one-click input that is issued at a user interface provided by the user interface device 30. Thus, the operator may easily select or rather adapt a certain layout of a certain output device 22 accordingly by simply adapting the scenario to apply for the respective multi-viewer display.

In a similar manner, a new scenario may be generated easily by means of a drag-and-drop functionality as already indicated above. The operator may interact with the user interface device 30, thereby configuring a new scenario that can be stored in the data base 24 for subsequent usage.

In general, the system 10 enables a fast and easy configuration of a graphical layout of a multi-viewer display.

Certain embodiments disclosed herein, particularly the respective module(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A system for configuring the graphical layout of at least one multi-viewer display, wherein the system (10) comprises at least one processing and presentation module (12) that is configured to receive at least one input signal, to process the at least one input signal, thereby generating at least one output signal depending on the at least one input signal, and to output the at least one output signal,
wherein the system (10) comprises at least one display module (18) that is connected with the processing and presentation module (12), wherein the at least one display module (18) is configured to forward the at least one output signal to an output device (22),
wherein the system (10) comprises a data base (24) that is configured to store predefined information of at least one system setup, wherein the predefined information comprises configuration information for the display module (18) and/or the processing and presentation module (12), wherein the configuration information defines a desired application-specific layout of the at least one multi-viewer display,
wherein the system (10) comprises at least one interface (26) configured to connect the processing and presentation module (12) with the data base (24) such that the processing and presentation module (12) is enabled to access the data base (24), thereby retrieving the predefined information stored,
wherein the system (10) is configured to provide an application-specific display of the multi-viewer display since the display module (18) is configured to forward data associated with the at least one output signal in the application-specific layout based on the predefined information of the at least one system setup, thereby providing an application-specific display layout and an application-specific room design.

2. The system according to claim 1, wherein the system (10) comprises an operator and control room (28) that accommodates a user interface device (30) that is configured to enable a user of the system (10) to control the processing and presentation module (12) at least.

3. The system according to claim 1 or 2, wherein the predefined information of the at least one system setup defines which video and/or audio channels, particularly together with their respective bit rates, are used by the processing and presentation module (12) for generating the at least one output signal.

4. The system according to any of the preceding claims, wherein customer-specific scenarios are stored in the data base together with predefined scenarios provided by the manufacturer.

5. The system according to any of the preceding claims, wherein the system (10) is configured to provide a centralized monitoring, controlling and configuration of several multi-viewer devices connected with the system (10).

6. The system according to any of the preceding claims, wherein the system (10) is further configured to download and install updates for multi-viewer devices connected with the system (10) in a centralized manner.

7. The system according to any of the preceding claims, wherein the system (10) is configured to toggle between different scenarios by means of an one-click input issued at a user interface, in particular wherein several multi-viewer devices are operated in different scenarios by means of an one-click input.

8. The system according to any of the preceding claims, wherein the system (10) is configured to generate a new scenario to be applied by means of a drag-and-drop functionality.

9. The system according to any of the preceding claims, wherein the input signal is at least one audio signal and/or video signal and/or wherein the input signal is at least one data signal, particularly an IP signal.

10. The system according to any of the preceding claims, wherein the at least one interface (26) is an IP interface, an ASI, a HDMI, a DisplayPort interface and/or an SDI.

11. The system according to any of the preceding claims, wherein the output device (22) corresponds to a monitor or an additional subsystem configured to further process the at least one output signal, particularly an IP to multimedia interface converter, in particular wherein the output device and/or the additional subsystem may be connected locally or remotely over a network.

12. The system according to any of the preceding claims, wherein the system (10) comprises several multi-viewer devices connected with the at least one display module (18).

13. A method of configuring the graphical layout of at least one multi-viewer display, wherein the method comprises the steps of:
- Receiving at least one input signal by means of a processing and presentation module (12),
- Processing the at least one input signal by means of the processing and presentation module (12),
- Accessing, by means of the processing and presentation module (12), a data base (24) via an interface (26) configured to connect the processing and presentation module (12) with the data base (24), wherein the data base (24) comprises predefined information of at least one system setup, wherein the predefined information comprises configuration information for a display module (18) and/or the processing and presentation module (12), wherein the configuration information defines a desired application-specific layout of the at least one multi-viewer display,
- Generating at least one output signal depending on the at least one input signal,
- Outputting the output signal by means of the processing and presentation module (12),
- Receiving, by means of the display module (18), the output signal from the processing and presentation module (12), and
- Forwarding the output signal to an output device (22).

14. The method according to claim 13, wherein an operator creates a customer-specific scenario that is saved in the data base (24) together with predefined scenarios provided by the manufacturer.

15. The method according to claim 13 or 14, wherein an operator toggles between different scenarios by interacting with an one-click input provided at a user interface.
